# EUROPEAN PATENT SPECIFICATION

(11) **EP 4 638 053 B1**
(45) Date of publication and mention of the grant of the patent: **29.07.2026**
(21) Application number: 23837776.6
(22) Date of filing: 15.12.2023
(51) Int. Cl.: B23K 37/047, B23K 37/053, B23Q 7/00, B23Q 1/76, B23K 26/08, B23K 26/38, B23K 101/06

(54) **MACHINE FOR LASER PROCESSING OF TUBES AND PROFILES, IN PARTICULAR MACHINE FOR LASER CUTTING OF TUBES AND PROFILES, WITH SYSTEM FOR SUPPORTING THE TUBE OR PROFILE INCLUDING AT LEAST ONE VARIABLE RADIUS SHAPE**
LASERBEARBEITUNGSMASCHINE FÜR ROHRE UND PROFILE, INSBESONDERE LASERSCHNEIDMASCHINE FÜR ROHRE UND PROFILE, MIT EINEM ZUMINDEST EINEN VARIABLEN RADIUS AUFWEISENDEN STÜTZSYSTEM
MACHINE DE TRAITEMENT PAR LASER DE TUBES ET DE PROFILÉS, EN PARTICULIER MACHINE DE DÉCOUPE PAR LASER DE TUBES ET DE PROFILÉS, AVEC UN SYSTÈME DE SUPPORT DU TUBE OU DU PROFILÉ COMPRENANT AU MOINS UNE FORME À RAYON VARIABLE

(30) Priority: 21.12.2022 IT 202200026244
(43) Date of publication of application: 29.10.2025
(73) Proprietor: ADIGE-SYS S.P.A., 38056 Levico Terme (TN) (IT)
(72) Inventor: BALDESSARI, Matteo, 38057 Pergine Valsugana TN (IT); BONENTI, Claudio, 38051 Borgo Valsugana TN (IT); BEBER, Marco, 38050 Novaledo TN (IT); ARMELLINI, Paolo, 38051 Borgo Valsugana TN (IT)
(74) Representative: Rondano, Davide
(86) International application number: PCT/IB2023/062751
(87) International publication number: WO 2024/134410

(56) References cited:
- EP-A1- 2 508 298
- CN-A- 111 168 256
- CN-U- 207 873 440
- DE-A1- 102016 104 107

## Description

The present invention relates generally to a support system for use in a machine for the laser working of tubes and profiles, in particular a machine for the laser cutting of tubes and profiles, for supporting the tube or profile being worked. More specifically, the present invention relates to a machine for the laser working, in particular for the laser cutting, of tubes and profiles, with a support system of the type comprising at least one rotatable support member having a variable-radius receiving cavity so as to be able to adapt to tubes and profiles with cross-sections of different shapes and sizes.

### State of the art

In machines for the laser working of tubes and profiles, in particular for the laser cutting of tubes and profiles, the tube or profile being worked is normally held at its rear end, or tail end, by the holding means of a tube-holding carriage and is supported and guided close to the working area, where a working head performs the required working operations on the tube or profile by means of a focused laser beam, by a ring-shaped support member. The holding means of the tube-holding carriage define a feed axis of the machine, with which a longitudinal axis of the tube or profile is aligned during working, while the ring-shaped support member has the function of supporting and guiding the tube or profile being worked in the vicinity of the working head, ensuring that the longitudinal axis of the tube or profile is aligned with the feed axis. Typically, the tube-holding carriage is movable in the direction of the longitudinal axis of the tube or profile to control the forward movement of the tube or profile and is also provided with rotation control means for controlling the rotary movement of the tube or profile about its longitudinal axis, while the ring-shaped support member is mounted in a fixed or movable position on the machine base, upstream or downstream (with respect to the direction of advancement of the tube or profile) of the working head. In some cases, a plurality of ring-shaped support members may be used, which may be mounted in a fixed or movable position on the machine bed and may possibly perform the function of an additional tube-holding carriage.

In order to ensure proper support of the tube or profile being worked over its entire length, the machine is generally provided with support devices arranged between the tube-holding carriage and the ring-shaped support member to support the tube or profile being worked.

Various kinds of support systems for supporting a tube or profile on a machine for the laser working of tubes and profiles, in particular a machine for the laser cutting of tubes and profiles, are known.

According to a first known solution, the support system comprises one or more support devices each having a cylindrical roller supported at the end of a swing arm. In this case, the angular position of the swing arm is adjusted, for example by numerical control, to position the roller at the desired height.

According to a further known solution, the support system comprises one or more variable-radius support members, each of which is rotatably supported for rotation about a horizontal axis of rotation extending transverse to the tube or profile being worked, i.e. lying in a plane perpendicular to the longitudinal axis of the tube or profile. Each support member has a receiving cavity for receiving the tube or profile, whose profile has, in cross-section, a circumference arc shape with a radius that varies according to the angular position of the support member about the aforementioned axis of rotation. More specifically, the receiving cavity is shaped in such a way that the radius of the circumferential arc profile increases continuously with the rotation of the support member in a given direction. By controlling the angular position of the support member about its axis of rotation, it is thus possible to vary the radius of the circumference arc profile of the receiving cavity according to the shape and size of the cross-section of the tube or profile being worked. Such a support member is able, on the one hand, to adapt to the size of the tube or profile being worked, as well as being able to support tubes and profiles with a cross-section of other shape (not only circular, but also for example square, rectangular, C-shaped, I-shaped, L-shaped, etc.), and, on the other, to restrain the tube or profile laterally.

Support systems of the type comprising variable-radius support members are typically used on machines intended for working tubes and profiles of short length (less than 10 metres). In the case of tubes and profiles of greater length (more than 10 metres), there is the problem of containing the lateral deformations - the so-called 'flaring' - of the tube or profile being worked. To overcome this problem, the solution currently used is to provide one or more ring-shaped support members, in addition to the one normally provided near the working head, which are arranged along the machine at a certain distance from each other and through which the tube or profile being worked is caused to move. However, this solution is particularly expensive, and also takes up a lot of space.

A machine for the laser working, in particular for the laser cutting, of tubes and profiles having a support system as defined in the preamble of the enclosed independent claim 1 is known for example from CN111168256. In particular, according to this known solution the support system comprises both lower support means, formed by support wheels, which are placed below the feed axis to support from below the tube or profile being worked and lateral restraining means, formed by rods, which are placed above the feed axis to laterally restrain the tube or profile being worked. This known solution does not allow to restrain effectively and safely tubes or profiles with a large cross-section and/or a heavy weight.

### Summary of the invention

It is thus an object of the present invention to provide a machine for the laser working of tubes and profiles with a support system for supporting the tube or profile that is not affected by the drawbacks of the prior art mentioned above.

This and other objects are fully achieved according to the present invention by means of a machine for the laser working of tubes and profiles provided with a support system as defined in independent claim 1.

Advantageous embodiments of the invention are specified in the dependent claims, the subject-matter of which is to be understood as forming part of the following description. In summary, the invention is based on the idea of providing a support system comprising, in addition to support means arranged below the feed axis of the machine, lateral restraining means arranged above the feed axis of the machine, wherein said lateral restraining means comprise at least one variable-radius support member arranged so that its axis of rotation is oriented in a transverse plane, i.e. in a plane perpendicular to the feed axis of the machine.

Thanks to the fact of being provided with variable-radius support members arranged above the feed axis of the machine, and therefore above the tube or profile when the latter is being worked on the machine, the support system according to the present invention is able to ensure an adequate lateral containment of the tube or profile, without the need to use additional ring-shaped support members and therefore without incurring in the drawbacks associated with the use of such ring-shaped support members. In particular, a support system according to the present invention is advantageous both in the case of use with tubes and profiles having a cross-section with a low moment of inertia (therefore, with particularly flexible tubes and profiles) and in the case of use with tubes and profiles having a cross-section with a high moment of inertia (therefore, with particularly heavy tubes and profiles). In both cases, ineffective lateral containment of the tube or profile can lead to several drawbacks, such as:
- poor working quality and accuracy, since the actual position of the tube or profile in the working area of the machine does not coincide with the desired position due to the lateral bending of the tube or profile;
- problems with the unloading of the tube or profile, as the tube or profile might end up in a position not suitable for automatic unloading from the machine due to its lateral bending; and
- risk of damages to the machine due to lateral movements of the tube or profile.

These drawbacks are avoided, or at least greatly reduced, with the use of a support system according to the invention.

Preferably, the at least one variable-radius support member forming part of the lateral restraining means is arranged so that its axis of rotation is oriented horizontally or inclined by an acute angle to the horizontal.

Preferably, a motor, for example an electric motor, is associated with each variable-radius support member forming part of the lateral restraining means for driving the respective support member into rotation, and this motor is mounted so that its shaft is arranged coaxially with the axis of rotation of the respective support member. The vertical size of the assembly formed by the variable-radius support member and the motor are thus minimised.

The variable-radius support members forming part of the lateral restraining means may be arranged on the feeding side of the machine, i.e. upstream of the working head, and/or on the unloading side of the machine, i.e. downstream of the working head.

Preferably, also the support means comprise at least one variable-radius support member, which is arranged in particular so that its axis of rotation is oriented horizontally. In this case, the at least one variable-radius support member of the lateral restraining means and the at least one variable-radius support member of the supporting means are preferably arranged longitudinally offset from each other.

### Brief description of the drawings

Further features and advantages of the present invention will be evident from the following detailed description, given purely by way of non-limiting example with reference to the accompanying drawings, wherein:
- Figures 1 and 2 are a perspective view and a side view, respectively, of part of a machine for the laser cutting of tubes and profiles according to an embodiment of the present invention;
- Figures 3 and 4 are a side and perspective view, respectively, of part of the support system of the machine of Figures 1 and 2 immediately downstream of the working head;
- Figure 5 is a perspective view of a variable-radius support member of the support system of Figures 3 and 4, arranged below the feed axis of the machine;
- Figure 6 is a perspective view of a variable-radius support member of the support system of Figures 3 and 4, arranged above the feed axis of the machine;
- Figures 7 and 8 are front views of the support system of Figures 3 and 4, in the case of use with a circular tube and with a square tube, respectively; and
- Figures 9 and 10 are a perspective view and a front view, respectively, of part of a support system, immediately downstream of the working head, of a machine for the laser cutting of tubes and profiles according to a further embodiment of the present invention.

### Detailed description

In the following description and claims, the term "longitudinal" is used to identify a direction coincident with, or parallel to, a longitudinal axis of the tube or profile being worked on the machine, while the term "transverse" is used to identify a direction lying in a plane perpendicular to the longitudinal axis. Furthermore, terms such as "upper" and "lower", or "horizontal" and "vertical" etc., used in relation to the support system, are intended to refer to the condition in which the support system is mounted on the machine.

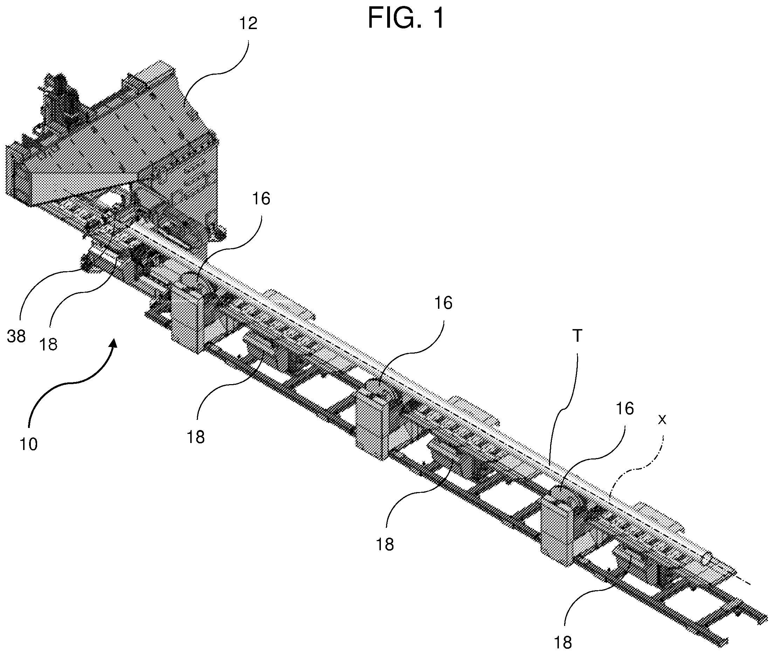

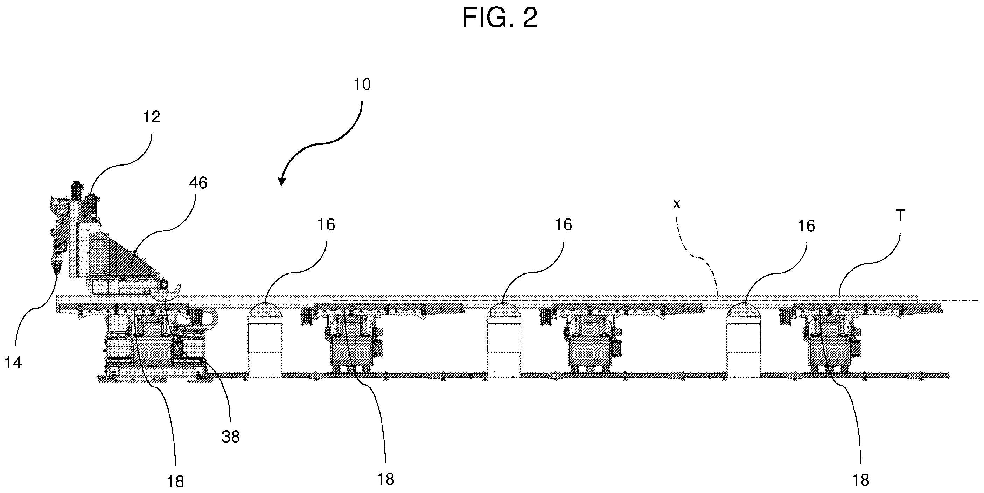

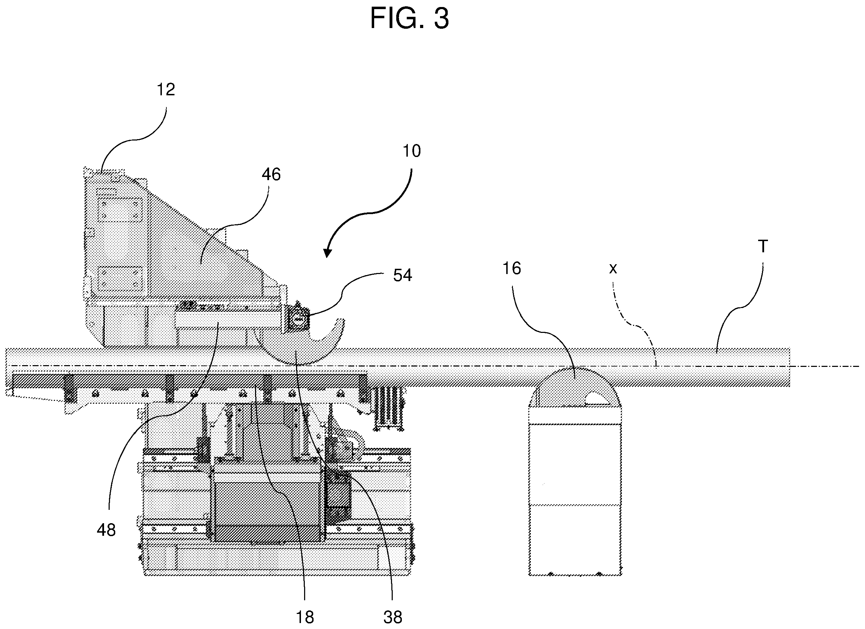

Referring first to Figures 1 to 4, a machine for the working of tubes and profiles, to which a support system according to the invention is applicable, is generally indicated with 10. In the example proposed herein, the machine is a machine for the laser cutting of tubes and profiles, but the invention is equally applicable to other types of machines for the laser working of tubes and profiles in which there is a need to support the tube or profile being worked for its entire length or part of its length.

Furthermore, in the example proposed herein the support system according to the present invention is arranged on the unloading side of the machine, and therefore in the following description reference will be made to such an arrangement of the support system, but - as mentioned above - the support system according to the invention may also be provided, alternatively or additionally, on the feeding side of the machine.

The machine 10 comprises, in a per-se-known manner, a working unit 12 with a working head 14 capable of performing working operations (which in the present case are cutting operations, but which might also include other types of operations, such as welding operations) by means of a laser beam focused on a tube T. The longitudinal axis of the tube T is indicated x. The tube T shown in Figures 1 to 3 is a tube with a circular cross-section, but nevertheless the machine 10 is capable of working on tubes with a cross-section of any other shape, for example square or rectangular, as well as on profiles of any shape, for example C-profiles, T-profiles, IPE profiles, HEA profiles, and the like. For the sake of convenience, only the term tube will be used in the following description, it being understood, however, that what is illustrated below is equally applicable to the case that the machine is used to work on a profile.

The machine 10 further comprises a tube-holding carriage (not shown, but anyway of a per-se-known type) provided with holding means configured to hold the tube T at one end (tail end). Such holding means define a feed axis of the machine, with which the longitudinal axis x of the tube T is aligned during working. Upstream of the working head 14, and in its vicinity, there is also advantageously provided a ring-shaped support member (not shown, but anyway of a per-se-known type) capable of supporting and guiding the tube T being worked while keeping the longitudinal axis x of the tube T aligned with the feed axis. During working, the tube T is caused by the tube-holding carriage to move forward along the direction of its longitudinal axis x, as well as possibly to rotate about this axis.

The machine 10 further comprises a support system for supporting the tube T, in the present case downstream of the working head 14 (but, as already mentioned and as further explained below, a tube support system of the same type may also be used upstream of the working head 14). The support system basically comprises lower support means arranged below the feed axis to support the tube T from below and lateral restraining means arranged above the feed axis to laterally restrain the tube T. The lower support means may be of various types. In the embodiment proposed herein, the lower support means comprise a plurality of variable-radius support members 16 (hereinafter, for convenience, simply referred to as support members) and a plurality of roller tracks, i.e. roller support devices, 18. The support members 16 and the roller tracks 18 are arranged one after the other along the direction of the feed axis, preferably in an alternating manner, i.e. with a support member 16 interposed between each pair of consecutive roller tracks 18 and vice versa.

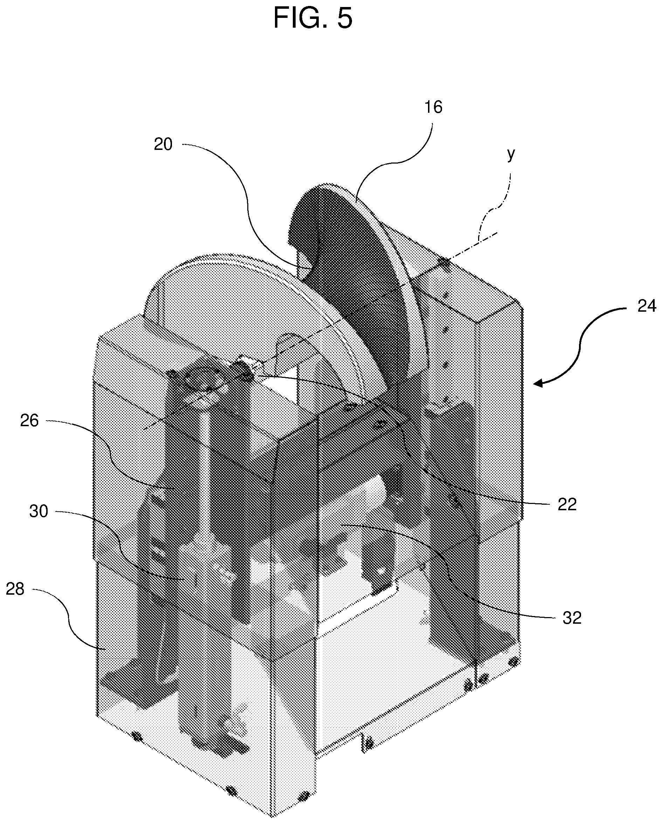

As shown in detail in Figure 5, each support member 16 has, in a per-se-known manner, a receiving cavity 20 whose profile has, in cross-section, a circumferential arc shape with a radius that varies according to the angular position of the support member. More specifically, the receiving cavity 20 is shaped in such a way that the radius of the circumferential arc profile increases continuously with the rotation of the support member 16 in a given direction, in the present case in a clockwise direction with respect to a person looking at Figure 5.

Each support member 16 is mounted on a respective shaft 22, which in turn is supported by a respective support structure 24 so as to be rotatable about an axis of rotation y lying in a transverse plane, i.e. in a plane perpendicular to the feed axis of the machine. Preferably, as in the illustrated example, the axis of rotation y is oriented horizontally, but it might also be inclined by a certain angle, in particular an acute angle, to the horizontal.

Vertical positioning means are associated with each support member 16 for adjusting the vertical position of the shaft 22, and therefore of the support member 16 carried thereon, so as to allow, for example, to move the support member 16 from a working position, in which the support member 16 is in contact with the tube T, to a rest position, in which the support member 16 is not in contact with the tube T and therefore does not perform any supporting action on the tube. In this respect, according to the embodiment proposed herein, the support structure 24 comprises an upper structure part 26, on which the shaft 22 is mounted, a lower structure part 28, with respect to which the upper structure part 26 is vertically movable, and actuator means, formed for example by a pneumatic cylinder 30, arranged to move the upper structure part 26 with respect to the lower structure part 28 in a vertical direction.

Rotation control means suitable for controlling rotation of the shaft 22, and thus of the support member 16, are also associated with each support member 16 in order to select the radius of the circumference arc profile of the receiving cavity 20 of the support member 16 which is most suitable for the tube T to be supported. According to the embodiment proposed herein, such rotation control means comprise a motor 32, in particular an electric motor, which is mounted on the upper structure part 26 of the support structure 24, and a transmission mechanism, such as a belt and pulley mechanism (not visible in the view of Figure 5, but in any case of a per-se-known type), for transmitting to the shaft 22 the rotary motion in one direction or the other generated by the motor 32.

According to an embodiment (not shown in the drawings), tilt adjustment means may also be associated with each support member 16 to adjust the angle of inclination of the axis of rotation y of the support member 16 to the horizontal.

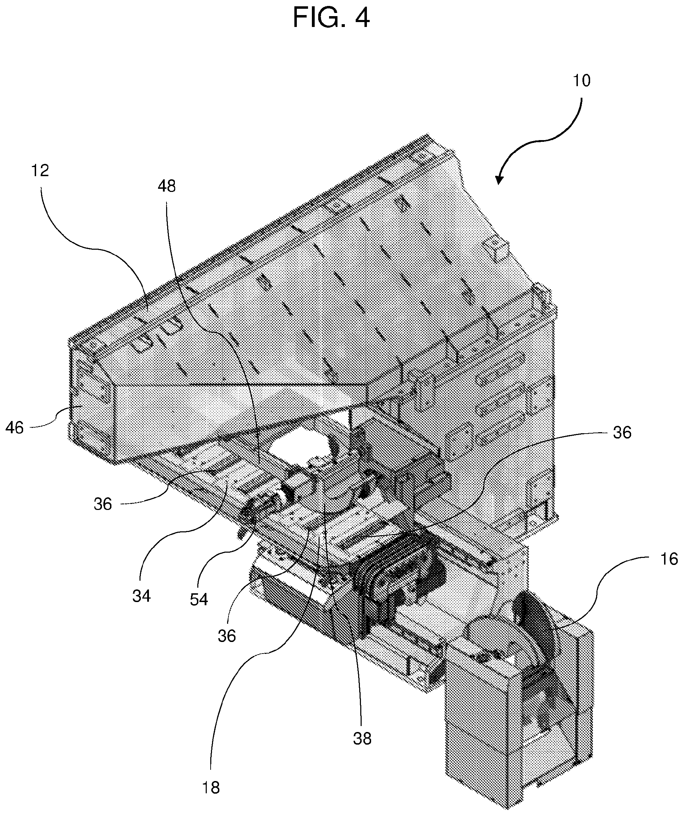

As far as the roller tracks 18 are concerned, each of them basically comprises a table 34 on which a plurality of idle rollers 36 are mounted in a freely rotatable manner about respective horizontal axes of rotation oriented perpendicular to the feed axis of the machine, as shown in Figure 4. The table 34 is vertically movable under the control of actuator means (not illustrated in detail, but nevertheless of a per-se-known type), so as to allow the vertical position of the idle rollers 36 to be adjusted depending on the transverse size of the tube T being worked.

According to the invention, the lateral restraining means comprise at least one variable-radius support member 38 (hereinafter simply referred to, for convenience, as support member). In the embodiment of Figures 1 to 8, only one support member 38 is provided for, which is arranged in the vicinity of the working head 14, immediately downstream thereof. More specifically, the support member 38 is arranged above one of the roller tracks 18, thus at a distance, along the direction of the feed axis of the machine, from the first one of the support members 16 downstream of the working head 14. However, several support members 38 may be provided for, for example as many as the roller tracks 18, in which case each support member 38 will be arranged above a respective roller track 18.

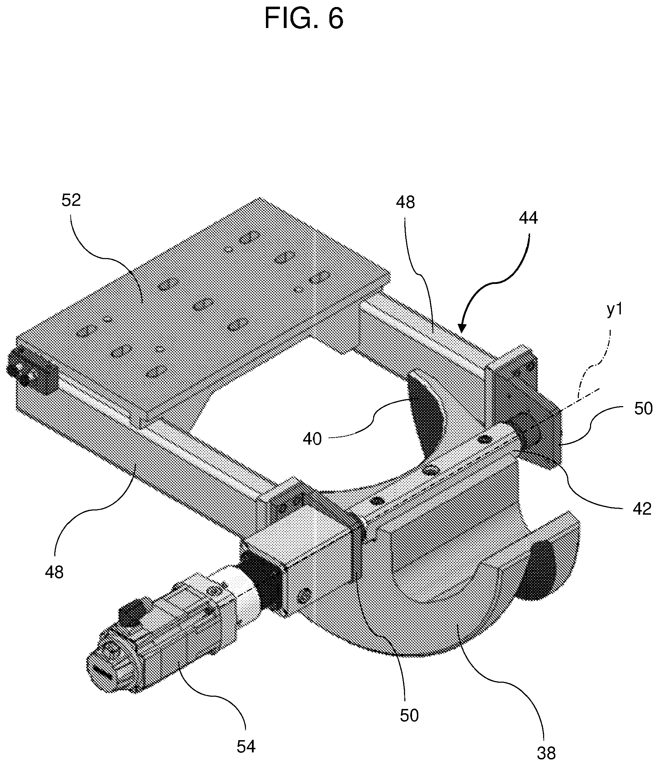

With reference to Figure 6, the support member 38 has a structure similar to that of the support members 16 described above and therefore also has, in a per-se-known manner, a receiving cavity 40 whose profile has, in cross-section, a circumferential arc shape with a radius that varies according to the angular position of the support member. More specifically, the receiving cavity 40 is shaped in such a way that the radius of the circumferential arc profile increases continuously with the rotation of the support member 38 in a given direction, in the present case in a counterclockwise direction with respect to a person looking at Figure 6.

The support member 38 is mounted on a shaft 42, which in turn is supported by a support structure 44 so as to be rotatable about an axis of rotation y1 lying in a transverse plane, i.e. in a plane perpendicular to the feed axis of the machine.

Preferably, as in the illustrated example, the axis of rotation y1 is oriented horizontally, but it might also be inclined by a certain angle, in particular an acute angle, to the horizontal. Also in this case, it is possible to envisage the use of means for adjusting the angle of inclination of the axis of rotation y1 of the support member 38 to the horizontal.

The support structure 44 may be vertically fixed, as in the embodiment proposed herein, or may be vertically movable, in which case suitable vertical positioning means will be provided to adjust the vertical position of the support structure 44, and thus of the support member 38. In particular, in the embodiment proposed herein the support structure 44 is attached to a cross member 46 of the working unit 12 carrying the working head 14.

The support structure 44 may, for example, comprise, as in the embodiment proposed herein, a pair of longitudinal profiles 48, a pair of brackets 50, each of which is attached to an end of a respective longitudinal profile 48 and supports a respective end of the shaft 42, and a connecting plate 52, to which the longitudinal profiles 48 are attached and which in turn is attached to the cross member 46 of the working unit 12.

Furthermore, rotation control means are associated with the support member 38 for controlling rotation of the shaft 42, and thus of the support member 38, so as to select the radius of the circumference arc profile of the receiving cavity 40 which is most suitable for the tube T to be supported. According to the embodiment proposed herein, such rotation control means comprise a motor 54, in particular an electric motor, which is preferably mounted coaxially to the shaft 42, so as to minimise the vertical size of the assembly formed by the support member 38 and the motor 54.

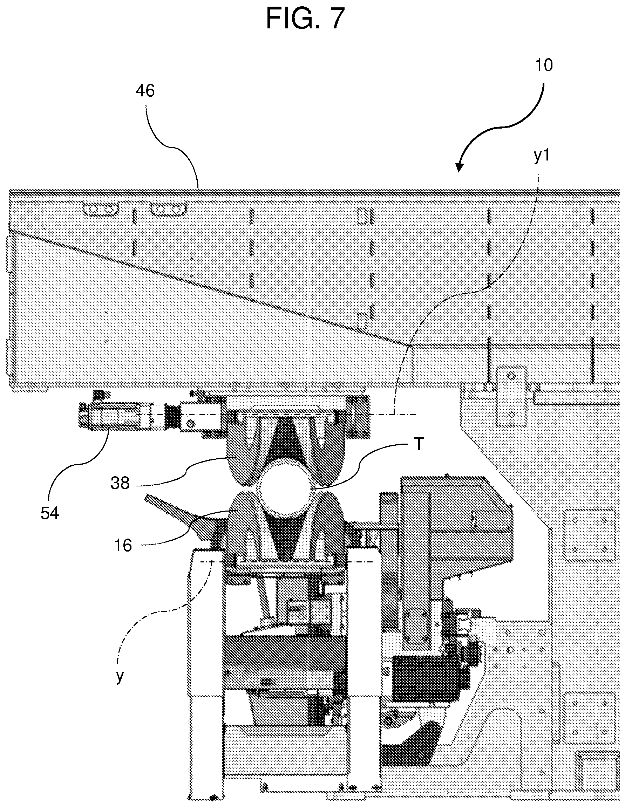

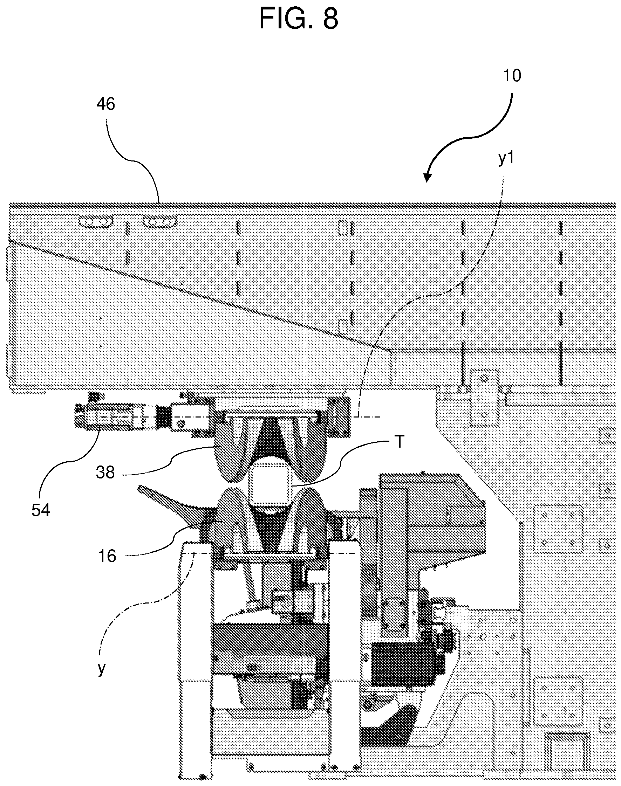

As can be seen in particular from the observation of Figures 7 and 8, relating respectively to the case in which the tube T has a circular cross-section and to the case in which the tube T has a square cross-section, the use of one or more variable-radius support members arranged above the feed axis of the machine represents a simple, economic and space-saving solution to the problem of ensuring adequate lateral containment of the tube, particularly when combined with the use of one or more variable-radius support members arranged below the feed axis of the machine as lower tube support means.

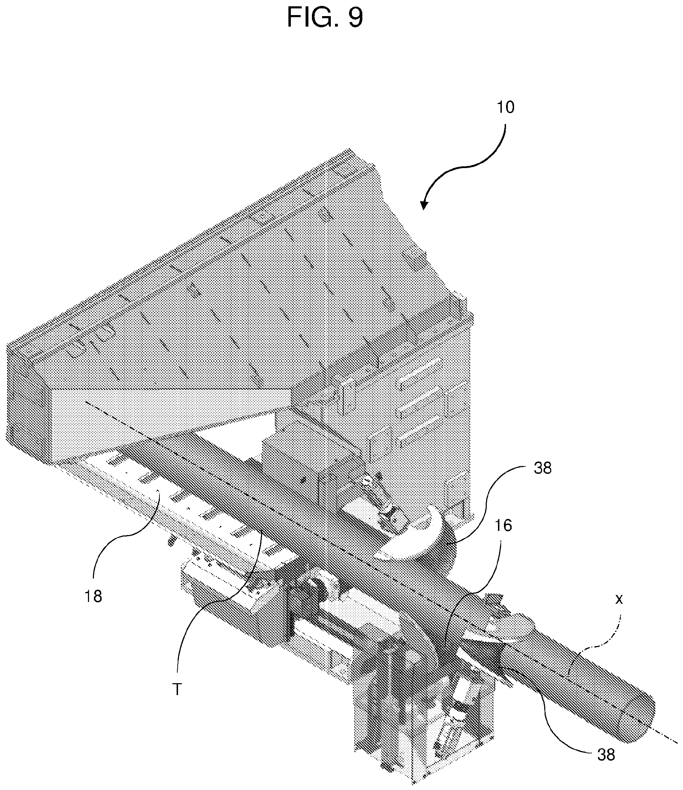

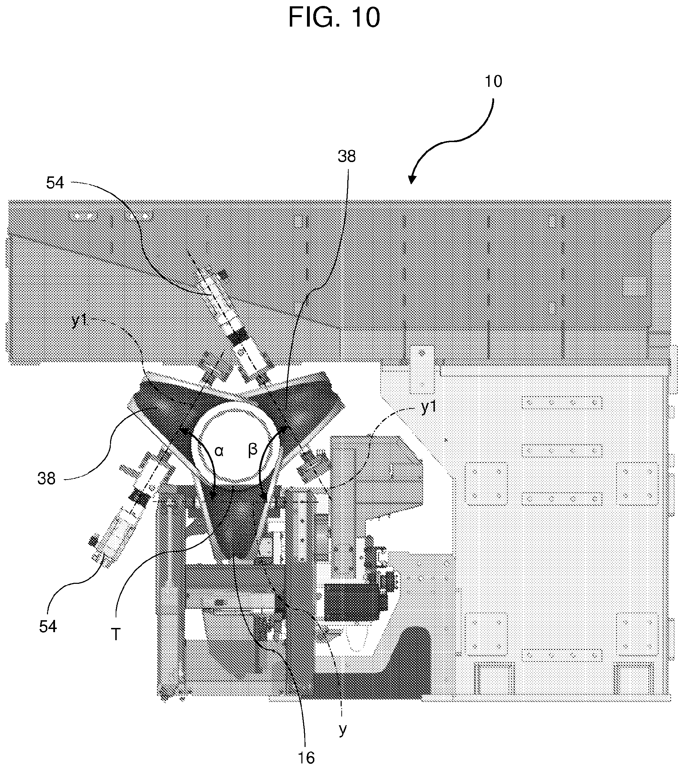

Finally, Figures 9 and 10, in which parts and elements identical or corresponding to those of the preceding figures have been assigned the same reference numbers, illustrate an alternative embodiment of the present invention, according to which, in addition to a variable-radius support member 16 arranged below the feed axis of the machine with the function of supporting the tube T, one or more pairs of support members 38 (of which only one pair of support members is shown in Figures 9 and 10) are provided with the function of lateral containment for the tube T. The pairs of support members 38 are in this case arranged with their respective axes of rotation y1 inclined by an acute angle (respectively indicated α and β) to the horizontal. In particular, in the example of Figures 9 and 10, the support member 16 and the support members 38 are arranged at 120° to each other and therefore completely embrace the profile of the tube T being worked. In this case, therefore, the axis of rotation y of the support member 16 is oriented horizontally, while the axes of rotation y1 of both support members 38 are inclined by 60° to the horizontal (in this case, therefore, α = β = 60°). For the rest, what has already been stated above with reference to the embodiment of Figures 1 to 8 still applies.

The present invention has been described herein with reference to some preferred embodiments thereof. It is to be understood that other embodiments may be envisaged, as long as they are falling under the scope of the present invention as defined in the appended claims.

For example, although in the embodiments proposed herein the use of one motor for each variable-radius support member is envisaged, it is nevertheless possible to envisage the use of one or more motors associated with several variable-radius support members, for example a first motor associated with all support members 16, i.e. all the support members arranged below the feed axis of the machine, and a second motor associated with all support members 38, i.e. all the support members arranged above the feed axis of the machine.

## Claims

1. Machine for the laser working, in particular for the laser cutting, of tubes and profiles (T), comprising
- a working unit (12) provided with laser working means (14),
- feeding means arranged to move each time a tube or profile (T) to be worked towards the working unit (12) along a feed axis coinciding with a longitudinal axis (x) of the tube or profile (T), and
- a support system (16, 18, 38) for supporting the tube or profile (T) being worked,
wherein the support system (16, 18, 38) comprises lower support means arranged below said feed axis to support from below the tube or profile (T) being worked and lateral restraining means arranged above said feed axis to laterally restrain the tube or profile (T) being worked,
**characterized in that** said lateral restraining means comprise at least one variable-radius support member (38), which is rotatably supported for rotation about a transverse axis of rotation (y1) and has a receiving cavity (40) whose profile has, in cross-section, a circumferential arc shape with a radius that varies according to the angular position of said support member (38) about said axis of rotation (y1).

2. Machine according to claim 1, wherein said axis of rotation (y1) is oriented horizontally, or inclined by an acute angle (α, β) to the horizontal.

3. Machine according to claim 1 or claim 2, wherein said lateral restraining means further comprise, for each variable-radius support member (38), inclination adjustment means for adjusting the angle of inclination (α, β) of said axis of rotation (y1) to the horizontal.

4. Machine according to any one of the preceding claims, wherein said lower support means and/or said lateral restraining means are arranged at least partially downstream of said laser working means (14).

5. Machine according to any one of the preceding claims, wherein said lateral restraining means further comprise, for each variable-radius support member (38), a motor (54) arranged to drive into rotation the respective variable-radius support member (38), and wherein said motor (54) is mounted coaxially with the axis of rotation (y1) of the respective variable-radius support member (38).

6. Machine according to any one of the preceding claims, wherein the working unit (12) comprises a cross member (46) carrying said laser working means (14), and wherein the variable-radius support member (38), or one of the variable-radius support members (38), respectively, of said lateral restraining means is carried by said cross member (46).

7. Machine according to any one of the preceding claims, wherein said lower support means comprise at least one variable-radius support member (16), which is rotatably supported for rotation about a transverse axis of rotation (y) and has a receiving cavity (20) whose profile has, in cross-section, a circumferential arc shape with a radius that varies according to the angular position of said support member (16) about said axis of rotation (y).

8. Machine according to claim 7, wherein said at least one variable-radius support member (38) of said lateral restraining means and said at least one variable-radius support member (16) of said lower support means are arranged offset with respect to each other along said feed axis.

9. Machine according to any one of the preceding claims, wherein said lower support means comprise at least one roller track (18) and wherein said at least one variable-radius support member (38) of said lateral restraining means is arranged above said at least one roller track (18).

10. Machine according to claim 9, and according to either claim 7 or claim 8, wherein the at least one variable-radius support member (16) and the at least one roller track (18) of said lower support means are arranged in an alternating manner along said feed axis.

## Patentansprüche

1. Maschine für die Laserbearbeitung, insbesondere für das Laserschneiden, von Rohren und Profilen (T), umfassend
- eine Bearbeitungseinheit (12), die mit Laserbearbeitungsmitteln (14) bereitgestellt ist,
- Vorschiebemittel, die angeordnet sind, um jeweils ein zu bearbeitendes Rohr oder Profil (T) entlang einer mit einer Längsachse (x) des Rohrs oder Profils (T) zusammenfallenden Vorschubachse in Richtung der Bearbeitungseinheit (12) zu bewegen, und
- ein Stützsystem (16, 18, 38) zum Stützen des zu bearbeitenden Rohrs oder Profils (T),
wobei das Stützsystem (16, 18, 38) untere Stützmittel, die unterhalb der Vorschubachse angeordnet sind, um das Rohr oder Profil (T), das bearbeitet wird, von unten abzustützen, und seitliche Rückhaltemittel umfasst, die oberhalb der Vorschubachse angeordnet sind, um das Rohr oder Profil (T), das bearbeitet wird, seitlich zurückzuhalten,
**dadurch gekennzeichnet, dass** die seitlichen Rückhaltemittel mindestens ein Stützelement (38) mit variablem Radius umfassen, das für eine Drehung um eine quer verlaufende Drehachse (y1) herum drehbar gestützt ist und einen Aufnahmehohlraum (40) aufweist, dessen Profil, in einem Querschnitt, eine umlaufende Bogenform mit einem Radius aufweist, der gemäß der Winkellage des Stützelements (38) um die Drehachse (y1) herum variiert.

2. Maschine nach Anspruch 1, wobei die Drehachse (y1) horizontal ausgerichtet oder um einen spitzen Winkel (α, β) zu der Horizontalen geneigt ist.

3. Maschine nach Anspruch 1 oder 2, wobei die seitlichen Rückhaltemittel ferner, für jedes Stützelement (38) mit variablem Radius, Neigungseinstellmittel zum Einstellen des Neigungswinkels (α, β) der Drehachse (y1) zu der Horizontalen umfassen.

4. Maschine nach einem der vorstehenden Ansprüche, wobei die unteren Stützmittel und/oder die seitlichen Rückhaltemittel mindestens teilweise den Laserbearbeitungsmitteln (14) nachgeschaltet angeordnet sind.

5. Maschine nach einem der vorstehenden Ansprüche, wobei die seitlichen Rückhaltemittel ferner, für jedes Stützelement mit variablem Radius (38), einen Motor (54) umfassen, der angeordnet ist, um das jeweilige Stützelement mit variablem Radius (38) in Drehung zu versetzen, und wobei der Motor (54) koaxial zu der Drehachse (y1) des jeweiligen Stützelements mit variablem Radius (38) montiert ist.

6. Maschine nach einem der vorstehenden Ansprüche, wobei die Arbeitseinheit (12) ein Querelement (46) umfasst, das die Laserbearbeitungsmittel (14) trägt, und wobei das Stützelement (38) mit variablem Radius beziehungsweise eines der Stützelemente (38) mit variablem Radius der seitlichen Rückhaltemittel durch das Querelement (46) getragen wird.

7. Maschine nach einem der vorstehenden Ansprüche, wobei die unteren Stützmittel mindestens ein Stützelement (16) mit variablem Radius umfassen, das für die Drehung um eine quer verlaufende Drehachse (y) drehbar gestützt ist und einen Aufnahmehohlraum (20) aufweist, dessen Profil, in dem Querschnitt, eine umlaufende Bogenform mit einem Radius aufweist, der gemäß der Winkellage des Stützelements (16) um die Drehachse (y) herum variiert.

8. Maschine nach Anspruch 7, wobei das mindestens eine Stützelement (38) mit variablem Radius der seitlichen Rückhaltemittel und das mindestens eine Stützelement (16) mit variablem Radius der unteren Stützmittel entlang der Vorschubachse versetzt in Bezug aufeinander angeordnet sind.

9. Maschine nach einem der vorstehenden Ansprüche, wobei die unteren Stützmittel mindestens eine Rollenbahn (18) umfassen und wobei das mindestens eine Stützelement (38) mit variablem Radius der seitlichen Rückhaltemittel oberhalb der mindestens einen Rollenbahn (18) angeordnet ist.

10. Maschine nach Anspruch 9 und nach entweder Anspruch 7 oder 8, wobei das mindestens eine Stützelement (16) mit variablem Radius und die mindestens eine Rollenbahn (18) des unteren Stützmittels entlang der Vorschubachse in einer abwechselnden Weise angeordnet sind.

## Revendications

1. Machine destinée à l'usinage au laser, en particulier pour la découpe au laser, de tubes et profilés (T), comprenant
- une unité d'usinage (12) pourvue d'un moyen d'usinage au laser (14),
- un moyen d'avance agencé pour déplacer chaque fois un tube ou un profilé (T) à usiner vers l'unité d'usinage (12) le long d'un axe d'avance coïncidant avec un axe longitudinal (x) du tube ou du profilé (T), et
- un système de support (16, 18, 38) permettant de supporter le tube ou le profilé (T) en cours d'usinage,
dans laquelle le système de support (16, 18, 38) comprend un moyen de support inférieur agencé en dessous dudit axe d'avance pour supporter, depuis le dessous, le tube ou le profilé (T) en cours d'usinage et un moyen de retenue latéral agencé au-dessus dudit axe d'avance pour retenir latéralement le tube ou le profilé (T) en cours d'usinage,
**caractérisée en ce que** ledit moyen de retenue latéral comprend au moins un élément de support à rayon variable (38), qui est supporté de manière rotative pour une rotation autour d'un axe de rotation transversal (y1) et a une cavité de réception (40) dont le profil a, en coupe transversale, une forme d'arc circonférentiel avec un rayon qui varie selon la position angulaire dudit élément de support (38) autour de ladite axe de rotation (y1).

2. Machine selon la revendication 1, dans laquelle ledit axe de rotation (y1) est orienté horizontalement, ou incliné d'un angle aigu (α, β) par rapport à l'horizontale.

3. Machine selon la revendication 1 ou la revendication 2, dans laquelle ledit moyen de retenue latéral comprend en outre, pour chaque élément de support à rayon variable (38), un moyen d'ajustement d'inclinaison destiné à ajuster l'angle d'inclinaison (α, β) dudit axe de rotation (y1) à l'horizontale.

4. Machine selon l'une quelconque des revendications précédentes, dans laquelle ledit moyen de support inférieur et/ou ledit moyen de retenue latéral sont agencés au moins partiellement en aval dudit moyen d'usinage au laser (14).

5. Machine selon l'une quelconque des revendications précédentes, dans laquelle ledit moyen de retenue latéral comprend en outre, pour chaque élément de support à rayon variable (38), un moteur (54) agencé pour entraîner en rotation l'élément de support à rayon variable (38) respectif, et dans laquelle ledit moteur (54) est monté de manière coaxiale avec l'axe de rotation (y1) de l'élément de support à rayon variable (38) respectif.

6. Machine selon l'une quelconque des revendications précédentes, dans laquelle l'unité d'usinage (12) comprend un élément transversal (46) portant ledit moyen d'usinage au laser (14), et dans laquelle l'élément de support à rayon variable (38), ou l'un des éléments de support à rayon variable (38), respectivement, dudit moyen de retenue latéral est porté par ledit élément transversal (46).

7. Machine selon l'une quelconque des revendications précédentes, dans laquelle ledit moyen de support inférieur comprend au moins un élément de support à rayon variable (16), qui est supporté de manière rotative pour une rotation autour d'un axe de rotation transversal (y) et a une cavité de réception (20) dont le profil a, en coupe transversale, une forme d'arc circonférentiel avec un rayon qui varie selon la position angulaire dudit élément de support (16) autour de ladite axe de rotation (y).

8. Machine selon la revendication 7, dans laquelle ledit au moins un élément de support à rayon variable (38) dudit moyen de retenue latéral et ledit au moins un élément de support à rayon variable (16) dudit moyen de support inférieur sont agencés de manière décalée l'un par rapport à l'autre le long dudit axe d'avance.

9. Machine selon l'une quelconque des revendications précédentes, dans laquelle ledit moyen de support inférieur comprend au moins un chemin de roulement (18) et dans laquelle ledit au moins un élément de support à rayon variable (38) dudit moyen de retenue latéral est agencé au-dessus dudit au moins un chemin de roulement (18).

10. Machine selon la revendication 9, et selon soit la revendication 7 soit la revendication 8, dans laquelle l'au moins un élément de support à rayon variable (16) et l'au moins un chemin de roulement (18) dudit moyen de support inférieur sont agencés de manière alternée le long dudit axe d'avance.
